Europäisches Patentamt

European Patent Office

Office européen des brevets

(11) Numéro de publication: **0 321 897**
**A1**

## (12) DEMANDE DE BREVET EUROPEEN

(21) Numéro de dépôt: **88121206.2**

(22) Date de dépôt: **19.12.88**

(51) Int. Cl.⁴: **B29C 67/14 , F16F 1/36**

(30) Priorité: **23.12.87 FR 8718053**

(43) Date de publication de la demande:
**28.06.89 Bulletin 89/26**

(84) Etats contractants désignés:
**AT CH DE ES FR IT LI SE**

(71) Demandeur: **VIBRACHOC, Société Anonyme dite:**
**Parc d'Activités de l'Eglantier C.E. 2804**
**Lisses**
**F-91028 Evry Cédex(FR)**

(72) Inventeur: **Fontaine, Bernard**
**57, rue de Cheval'Rue**
**F-91820 Boutigny-sur-Essonnes(FR)**
Inventeur: **Queudray, Pierre**
**60, rue de Sinotte Venoy**
**F-89290 Champs-sur-Yonne(FR)**

(74) Mandataire: **Weinmiller, Jürgen et al**
**Lennéstrasse 9 Postfach 24**
**D-8133 Feldafing(DE)**

(54) **Filament de renfort et d'amortissement, et élément d'amortissement obtenu par agencement de plusieurs filaments.**

(57) Filament de renfort et d'amortissement, et élément d'amortissement obtenu par agencement de plusieurs filaments.

La présente invention concerne un filament de renfort et d'amortissement (10), caractérisé en ce qu'il est constitué d'éléments de renforcement (11) se présentant sous la forme de fibres, fibrilles ou mèches, intimement liés entre eux par un matériau viscoélastique (12), ce filament étant ainsi intrinsèquement amorti.

Elle concerne également des éléments d'amortissement obtenues par agencement de plusieurs filaments.

Application aux composites amortis.

FIG.2

## Filament de renfort et d'amortissement, et élément d'amortissement obtenu par agencement de plusieurs filaments.

La présente invention concerne un filament de renfort et d'amortissement et un élément d'amortissement obtenu par agencement de plusieurs filaments, cet élément étant notamment destiné à être incorporé dans un matériau composite.

Un matériau composite est la réunion par un liant, ou matrice, de différentes couches de caractéristiques mécaniques diverses et spécifiques, chaque couche contribuant aux performances du composite.

On utilise depuis longtemps, dans ces matériaux composites, des éléments d'amortissement insérés entre deux couches et se présentant sous la forme de feuilles ou de plaques de matière viscoélastique pour absorber l'énergie de vibration et la transformer en échauffement. L'incorporation de tels éléments d'amortissement pose des problèmes d'adhérence avec les couches adjacentes contituées de résines.

On connaît, notamment par le document EP-A-0.235.087, un élément d'amortissement comportant des filaments en élastomère viscoélastique et des éléments de renforcement. L'élément d'amortissement se présente sous la forme d'un tissu qui peut être inséré entre deux couches de résines d'un composite, ce tissu, par définition perméable, facilitant l'adhésion des couches entre elles. Cet élément d'amortissement résoud bien ce problème d'adhérence de l'art antérieur, et présente une résistance accrue par la présence d'éléments de renforcement, mais cette résistance accrue se fait au détriment de la fonction d'amortissement. En effet, les filaments viscoélastiques et les éléments de renforcement sont juxtaposés, et non pas intimement liés, de sorte que, en cas de sollicitations, les éléments de renforcement s'opposent au travail des filaments viscoélastiques.

Le but de la présente invention est d'obtenir un élément d'amortissement qui garde toutes ses qualités, et ce but est atteint en incorporant les éléments de renforcement dans les filaments viscoélastiques. Ces filaments viscoélastique étant alors agencés entre eux pour obtenir un élément d'amortissement.

La présente invention a pour objet un filament de renfort et d'amortissement, caractérisé en ce qu'il est constitué d'éléments de renforcement se présentant sous la forme de fibres, fibrilles ou mèches, mis en vrac et intimement liés entre eux par un matériau viscoélastique, ce filament étant ainsi intrinsèquement amorti.

La présente invention a également pour objet un élément d'amortissement obtenu par agencement de plusieurs filaments. Ces filaments peuvent être agencés de manière quelconque, c'est-à-dire hachés et mis en vrac avec un liant, rangés en nappes unidirectionnelles ou multidirectionnelles, tricotés ou tissés par exemple, mais ces filaments peuvent aussi être utilisés isolément dans le matériau composite, c'est-à-dire séparés les uns des autres.

Il est décrit ci-après, à titre d'exemple et en référence aux dessins annexés, un filament selon l'invention.

La figure 1 montre un filament sans enveloppe extérieure.

La figure 2 montre une coupe longitudinale du filament de la figure 1.

La figure 3 montre la variante de réalisation, c'est-à-dire le même filament, avec une enveloppe extérieure en matériau viscoélastique.

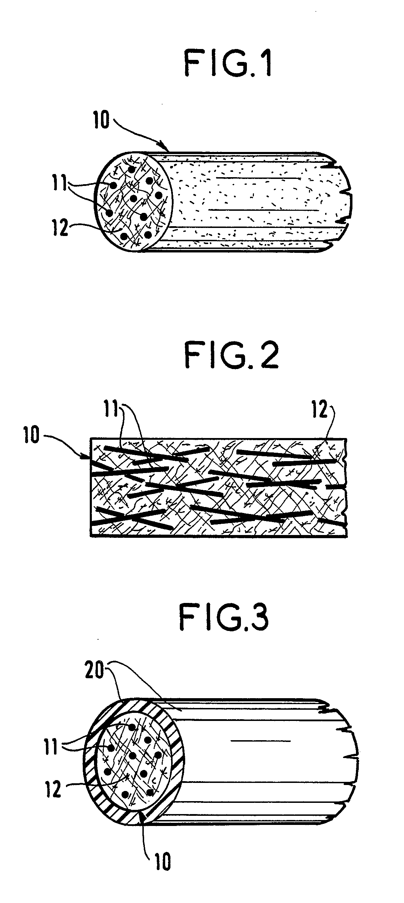

Dans la figure 1, le filament 10 est constitué d'éléments de renforcement 11 se présentant sous la forme de fibres, fibrilles ou mèches intimement liés entre eux par un matériau viscoélasti-que 12.

La coupe longitudinale de la figure 2 montre l'agencement des éléments de renforcement 11 dans le matériau 12, ces éléments étant de longueur et d'orientation quelconque. Le diamètre d'un tel élément peut être de 8 à 20 $\mu$m, et le diamètre d'un filament d'environ 0,2 à 1 mm par exemple.

Bien entendu le filament élémentaire peut être de section quelconque, circulaire ou non, et de longueur théoriquement illimitée.

Ce filament peut être, comme vu en figure 3, recouvert par une enveloppe souple en matériau viscoélastique.

## Revendications

1/ Filament de renfort et d'amortissement (10), caractérisé en ce qu'il est constitué d'éléments de renforcement (11) se présentant sous la forme de fibres, fibrilles ou mèches, mis en vrac et intimement liés entre eux par un matériau viscoélastique (12), ce filament étant ainsi intrinsèquement amorti.

2/ Filament selon la revendication 1, caractérisé en ce qu'il est recouvert par une enveloppe (20) en matériau viscoélastique.

3/ Elément d'amortissement obtenu par agencement de plusieurs filaments selon l'une des revendications 1 ou 2, caractérisé en ce que les filaments sont hachés et mis en vrac avec un liant.

4/ Elément d'amortissement obtenu par agencement de plusieurs filaments selon l'une des revendications 1 ou 2, caractérisé en ce que les filaments sont rangés en nappes unidirectionnelles ou multidirectionnelles.

5/ Elément d'amortissement obtenu par agencement de plusieurs filaments selon l'une des revendications 1 ou 2, caractérisé en ce que les filaments sont tricotés ou tissés.

# FIG.1

# FIG.2

# FIG.3

Office européen
des brevets

RAPPORT DE RECHERCHE EUROPEENNE

Numero de la demande

EP 88 12 1206

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | US-A-3 704 877 (NUNES et al.)<br>* Colonne 3, lignes 1-5; colonne 4, lignes 42-62; colonne 8, lignes 40-46; colonne 9, lignes 23-26,28-41,58-63; figures 1,6,8,12 * | 1 | F 16 F 1/36<br>B 29 C 67/14 |
| Y | | 2-5 | |
| | --- | | |
| X | FR-A-1 138 332 (SUPRA-DUPLEX)<br>* Page de garde, colonne de gauche, lignes 21-25; page de garde, colonne de droite, lignes 25-34; figure 3 * | 1 | |
| | --- | | |
| X | DE-A-2 022 873 (SOCIETE NATIONALE INDUSTRIELLE AEROSPATIALE)<br>* Page 10, alinéas 2-4; page 13, alinéa 4; figures 1-4 * | 1 | |
| | --- | | |
| X | FR-A-2 391 067 (COMMONWEALTH SCIENTIFIC AND INDUSTRIAL RESEARCH ORGANIZATION)<br>* Page 1, lignes 3-8; page 2, lignes 15-23; page 6, lignes 13-18; revendications 1-4; figures * | 1 | |
| | --- | | DOMAINES TECHNIQUES RECHERCHES (Int. Cl.4) |
| X | FR-A-1 200 370 (LES USINES LAPRADE)<br>* Page de garde, colonne de gauche, lignes 30-32; figure 5 * | 1 | F 16 F<br>B 29 C |
| | --- | | |
| Y | US-A-2 806 248 (GRAIG)<br>* Colonne 2, lignes 42-59; colonne 3, lignes 7-16; figures 3-5,7,8 * | 2 | |
| A | | 5 | |
| | ---       -/- | | |

Le présent rapport a été établi pour toutes les revendications

| Lieu de la recherche | Date d'achèvement de la recherche | Examinateur |
|---|---|---|
| LA HAYE | 20-03-1989 | MEIJS P.C.J. |

Office européen
des brevets

RAPPORT DE RECHERCHE EUROPEENNE

Numero de la demande

EP 88 12 1206

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | R. VIEWEG et al.: "Kunststoff-Handbuch", vol. VIII, "Polyester", 1973, pages 485-493, Hanser Verlag, Munich, DE * Page 493, lignes 1-5, figure 24; page 485, lignes 1-5, figure 19 * | 3 | |
| Y | EP-A-0 033 244 (SMITH) * Page 4, ligne 31 - page 5, ligne 2; page 5, lignes 16-25; page 6, lignes 9-22; page 7, lignes 6-10; figures 1-3 * | 4,5 | |
| A | FR-A-2 423 320 (ASAHI-DOW LTD) * Page 2, lignes 19-28; page 3, lignes 14-27; figures 1-3 * | 1 | |

DOMAINES TECHNIQUES RECHERCHES (Int. Cl.4)

Le présent rapport a été établi pour toutes les revendications

| Lieu de la recherche | Date d'achèvement de la recherche | Examinateur |
|---|---|---|
| LA HAYE | 20-03-1989 | MEIJS P.C.J. |

EPO FORM 1503 03.82 (P0402)